# EUROPÄISCHE PATENTSCHRIFT

(11) **EP 1 776 257 B1**
(45) Veröffentlichungstag und Bekanntmachung des Hinweises auf die Patenterteilung: **16.01.2008**
(21) Anmeldenummer: 05753796.1
(22) Anmeldetag: 28.05.2005
(51) Int. Cl.: B60R 21/13

(54) **ÜBERROLLSCHUTZSYSTEM FÜR KRAFTFAHRZEUGE MIT VERSENKBAREM DACH**
ROLL-BAR SYSTEM FOR MOTOR VEHICLES COMPRISING A RETRACTABLE ROOF
SYSTEME DE PROTECTION EN CAS DE RETOURNEMENT SUR VEHICULES A TOIT ESCAMOTABLE

(30) Priorität: 20.07.2004 DE 102004035015
(43) Veröffentlichungstag der Anmeldung: 25.04.2007
(73) Patentinhaber: ISE Innomotive Systems Europe GmbH, 51702 Bergneustadt (DE)
(72) Erfinder: LANG, Jozsef, H-1131 Budapest (HU)
(74) Vertreter: Fuchs
(86) Internationale Anmeldenummer: PCT/EP2005/005745
(87) Internationale Veröffentlichungsnummer: WO 2006/007898

(56) Entgegenhaltungen:
- EP-A- 1 084 914
- WO-A-20/04026628
- DE-A1- 3 826 788

## Beschreibung

Die Erfindung bezieht sich auf ein Überrollschutzsystem für Kraftfahrzeuge mit einem Dach, das motorisch mittels eines Dachverstellmechanismus versenkbar und aufziehbar ist, bestehend aus einem fahrzeugsitzbezogenen Überröllkörper ohne sensorgesteuerten Crash-Antrieb, der gekoppelt mit dem Dachverstellmechanisms zwangsgesteuert selbsttätig zwischen einer ersten starren Position bei geschlossenem Dach und einer zweiten, angehobenen starren Position bei geöffnetem Dach verfahrbar ist.

Derartige Überrollschutzsysteme dienen zum Schutz der Insassen in Kraftfahrzeugen ohne schützendes Dach, typischerweise in Cabriolets oder Sportwagen bei einem Überschlag, damit das Fahrzeug über den nach oben abragenden Überrollkörper abrollen kann.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten, sogenannten starren, vertikal nach oben abragenden Überrollbügel zuzuordnen. Diese Lösung wird typischerweise bei Sportwagen zur Unterstreichung des sportlichen Aussehens eingesetzt, findet sich jedoch auch bei Cabriolets.

Weit verbreitet bei Cabriolets sind auch konstruktive Lösungen, bei denen alternativ zu den starren Überrollbügeln der Überrollkörper im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Diese Überrollschutzsysteme weisen typischerweise einen in einem fahrzeugfesten Führungskörper geführten U-förmigen oder aus einem Profilkörper gebildeten Überrollkörper, auf, wobei der Führungskörper In einem Kassetten-Gehäuse befestigt ist. Dieser Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Drückfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dieser sogenannte Crash-Antrieb in Form der Antriebs-Druckfeder kann auch mit einem kontinuierlich verfahrbaren Antrieb, dem sogenannten Komfortantrieb, kombiniert sein.

Dabei ist typischerweise jedem Fahrzeugsitz eine Kassette zugeordnet, insbesondere bei den vorderen Fahrzeugsitzen. Im Fond können die Kassetten auch in einer Rückwand-Baueinheit integriert sein. Eine derartige Kassetten-Konstruktion eines Überrollbügelschutzsystems mit einem U-förmigen Überrollbügel zeigt beispielsweise die DE 43 42 400 A1; eine alternative Kassettenkonstruktion mit einem Überrollkörper in Form eines Profilkörpers zeigt insbesondere die DE 198 38 989 C1.

Die Erfindung geht von dem fahrzeugsitzbezogenen starren Überrollkörper-System aus.

Bei Sportwagen mit versenkbarem Dach (Verdeck) sowie bei Cabriolets ohnehin, muß allerdings der nach oben abragende, starre Überrollkörper beachtet werden, da das Verdeck über diesen hinweg fahren muß. Dabei darf insbesondere während des heute weitgehend automatisierten Öffnungs- und Schließvorganges des Verdeckes der nach oben abragende Überrollkörper die Bewegungsbahn des Verdeckes nicht behindern.
Da die Dachhöhe aus designerischen aber auch aus technischen Gründen (insbesondere C_{w}-Wert) begrenzt ist, ist auch die Höhe der Überrolltangente, vorgegeben durch das nach oben abragende Maß des Überrollkörpers, begrenzt, was einen Kompromiss zwischen den konstruktiven Forderungen einerseits und dem Personenschutz andererseits erfordert.

Durch die DE 44 25 954 C1 ist ein Überrollschutzsystem für Kraftfahrzeuge mit versenkbarem Dach bekannt geworden, das einen Überrollbügel aufweist, der einen ausreichenden Personenschutz sowohl bei geöffnetem als auch bei geschlossenem Dach gewährleistet, und der die Bewegungsbahn des Daches weder beim Öffnen noch beim Schließen behindert, indem der Überrollbügel bei geschlossenem Dach in einer unteren Ausstellposition und bei geöffnetem Dach in einer oberen Ausstellposition angeordnet ist, wobei ein Hubmechanismus für die Bewegung des Überrollbügels zwischen der unteren und der oberen Ausstellposition vorgesehen ist, der mittels einer mechanischen Zwangssteuerung an den zum Öffnen oder Schließen des Daches vorgesehenen Steuermechanismus angeschlossen ist.

Dieser bekannte Überrollbügel weist die Vorteile eines starren Überrollbügels auf, da er nicht vollständig in der Karosserie versenkbar ist, sondern lediglich zwischen zwei Ausstellpositionen beweglich ist, von denen beide einen ausreichenden Schutz für eine auf dem zugehörigen Fahrzeugsitz befindliche Person bieten. Dadurch, daß der Überrollbügel sich bei geschlossenem Dach in einer unteren Ausstellposition befindet, ist es möglich, das Dach stabil und aerodynamisch zu konzipieren, so daß sich das geschlossene Dach gestalterisch ansprechend in den Gesamteindruck der Karosserie einfügt sowie durch den etwas abgesenkten Überrollbügel von der Konstruktion her flacher über den Fahrgastraum gezogen werden kann. Durch die mechanische Zwangssteuerung des Aufstell-Hubmechanismus wird eine Zwangsverknüpfung zwischen der jeweiligen Ausstellposition des Überrollbügels und der Öffnungs- oder Schließbewegung des Daches erzielt.

Im bekannten Fall ist der mechanische Hubmechanismus für das Verstellen des in einer hülsenartigen Lagerung aufgenommenen Überrollbügels in die beiden aufgestellten Positionen mittels eines Bügelhebels mechanisch kraftschlüssig über einen Dachhebel mit der Steuermechanik für die Dachbewegung gekoppelt. Der Bügelhebel selbst ist dabei über eine Übertragungsstange mit einer Kulissenführung in der hülsenartigen Lagerung mit dem Überrollbügel an einem Kulissenstein verbunden.

Der mechanische Hubmechanismus zum Höhenverlagern des Überrollbügels, d.h. zum Anheben und Absenken des Überrollbügels in der Vertikalebene in die beiden Aufstellpositionen und seine mechanische Ankopplung an den mechanischen Zwangssteuermechanismus, mechanisch betätigt durch den Dach-Steuermechanismus, bedingt eine hochkomplexe kinematische Konstruktion mit einem hohen Montage- und Justieraufwand, die zudem störanfällig ist.

Die DE 600 01 224 T2 zeigt einen Überrollschutzbügel für ein Cabrio-Fahrzeug mit zusammenfaltbarem Dach, der nicht, wie sonst üblich, aus einem in sich starren einteiligen Bügel, sondern der aus zwei gelenkig an der Spitze des Bügels verbundenen Bügelelementen besteht, wobei die freien unteren Enden jedes Bügelelementes mittels einer Reibrolle, die ein Innengewinde aufweist, entlang einer horizontalen Gleitbahn mittels eines Spindelantriebes, gekoppelt mit dem Dachverstellmechanismus, zwischen zwei Positionen bewegbar sind. In der ersten Position sind die freien Enden voneinander beabstandet, so daß die Gelenkverbindung und damit die Spitze des Bügels abgesenkt ist und das Dach somit frei bewegbar ist. In der zweiten Position, die bei geöffnetem Dach eingenommen wird, liegen die freien Enden näher beieinander, so daß die Bügelelemente relativ steil aufgestellt sind und der Bügel die für den Schutz notwendige Aufstellhöhe hat.
Durch das obere Gelenk des zweielementigen Überrollbügels ist jedoch die Festigkeit des Überrollbügels maßgebend nachteilig beeinträchtigt. Zum anderen müssen bei einem Überschlag die beiden Reibrollen mit dem Innengewinde in Verbindung mit der antreibenden Spindel die hohen Kräfte aufnehmen, was eine entsprechende aufwändige Dimensionierung dieser Elemente erfordert.

Durch die DE 197 52 068 A1 ist ein Überrollschutzsystem für ein Kraftfahrzeug mit einem mehrteiligen Faltdach, bestehend aus einem vorderen Dachelement, das klappbar in eine heckseitige Ablagestelle am Wagenaufbau angelenkt ist, und einem hinteren, heckseitig angelenkten Dachelement, bekannt geworden. Das vordere Dachelement ist dabei über zwei gegenüberliegend angeordnete seitlich Dachstützen am Wagenaufbau drehbar angelenkt, wobei die seitlichen Dachstützen über die aufbauseitigen Drehachsen hinweg nach unten hin unter Bildung eines sich über die Breite des Fahrzeuges erstreckenden Überrollbügels mit zwei sitzbezogen ausgeformten U-förmigen Bügelabschnitten weitergeführt sind. Die Anordnung ist dabei so getroffen, daß der Überrollbügel zwangsweise in der Ablagestellung des vorderen Dachelementes seine obenliegende, schützende Stellung einnimmt. Dieses bekannte System erfordert einmal eine aufwändige, störanfällige Dachkonstruktion und zum anderen müssen die beiden Anlenkungen der Dachstützen am Wagenaufbau im Überschlagfall die hohen Kräfte aufnehmen, was eine entsprechend starke Auslegung der Anlenkung, die das Aussehen des Fahrzeuges beeinträchtigen kann, erforderlich macht. Ferner erfordert die Schwenkbewegung des Überrollbügels um die Querachse einen entsprechend großen Bauraum, der bei Fahrzeugen mit offenem Dach ohnehin knapp bemessen ist.

Dokument DE 3826788 beschreibt ein Überrollschutzsystem für Kraftfahrzeuge mit einem Dach, das motorisch mittels eines Dachverstellmechanismus versenkbar und aufziehbar ist, bestehend aus einem fahrzeugsitzbezogenen Überrollkörpe mit sensorgesteuerten Crash-Antrieb, der gekoppelt mit dem Dachverstellmechanisms zwangsgesteuert selbsttätig zwischen einer ersten starren Position bei geschlossenem Dach und einer zweiten, angehobenen starren Position bei geöffnetem Dach verfahrbar ist, wobei, der Überrollkörper ihm einmal ein mit dem Dachverstellmechanismus gekoppelter Antrieb zum betrieblich vertikalen Verstellen in dem Gehäuse (4) sowie ihm zum anderen eine positionsabhängig zwangsgesteuerte Verriegelungseinrichtung zum Verriegeln in der angehobenen Position zugeordnet ist.

Der Erfindung liegt die Aufgabe zugrunde, ausgehend von dem eingangs bezeichneten bekannten Überrollschutzsystem für Kraftfahrzeuge mit versenkbarem Dach dieses hinsichtlich des Aufstell-Hubmechanismus und des Zwangssteuermechanismus mit der Dachsteuerung signifikant zu vereinfachen, d.h. eine komplexe kinematische Konstruktion wie im bekannten Fall zu vermeiden.

Die Lösung dieser Aufgabe gelingt gemäß der Erfindung bei einem Überrollschutzsystem für Kraftfahrzeuge mit einem Dach, das motorisch mittels eines Dachverstellmechanismus versenkbar und aufziehbar ist, bestehend aus einem fahrzeugsitzbezogenen Überrollkörper ohne sensorgesteuerten Crash-Antrieb, der gekoppelt mit dem Dachverstellmechanisms zwangsgesteuert selbsttätig zwischen einer ersten starren Position bei geschlossenem Dach und einer zweiten, angehobenen starren Position bei geöffnetem Dach verfahrbar ist, dadurch, daß der Überrollkörper in einem fahrzeugfesten, kassettenartigen Gehäuse geführt aufgenommen ist und ihm einmal ein mit dem Dachverstellmechanismus gekoppelter Antrieb zum betrieblich vertikalen Verstellen in dem Gehäuse sowie ihm zum anderen eine positionsabhängig zwangsgesteuerte Verriegelungseinrichtung zum Verriegeln in der angehobenen Position zugeordnet ist.

Durch die erfindungsgemäßen Maßnahmen wird ein kinematisch unkompliziertes, einfaches zwangsgesteuertes Auf- und Rückstellen des Überrollkörpers erzielt.

Ausgestaltungen der Erfindung sind in Unteransprüchen gekennzeichnet sowie ergeben sich auch aus der Figurenbeschreibung.

Anhand von in den Zeichnungen dargestellten Ausführungsbeispielen wird die Erfindung näher erläutert.

Es zeigen:
- Fig. 1: in einer isometrischen Darstellung eine erste Ausführungsform der Erfindung mit einem in einer Kassette geführten Überrollbügel, der mittels eines elektromotorischen Spindelantriebes, elektrisch gesteuert durch den Dachaufstell-Mechanismus, in zwei Positionen aufstellbar ist, mit einer Verriegelung des Überrollbügels in seiner bei geöffnetem Dach aufgestellten Position durch ein Doppelgewinde an der Mutter des Spindelantriebes,
- Fig. 2: in drei Längsschnitt-Darstellungen A - C des Systems nach Fig. 1 drei verschiedene Positionen des Überrollbügels,
- Fig. 3: in einer isometrischen Darstellung eine Variante der Ausführungsform nach Fig. 1 mit dem elektromotorischen Spindelantrieb, jedoch mit einer Verriegelung durch zwei lageabhängig gesteuerte Verriegelungs-Klinken,
- Fig. 4: in sieben Längsschnitt-Darstellungen A - G des Systems nach Fig. 3 sieben verschiedene Zustände des Überrollbügels sowie der Verrlegelungs-Klinken,
- Fig. 5: in einer vergrößerten isometrischen Darstellung die positionsabhängige Steuerung der Verriegelungs-Klinken des Systems nach Fig. 3 durch die Mutter des Spindelantriebes, mit verriegelten Klinken im Figurenteil A und entriegelten Klinken im Figurenteil B,
- Fig. 6: in vier Figurenteilen A - D in Längsschnitt-Darstellungen eine weitere Ausführungsform der Erfindung mit Aufstellung des Überrollbügels durch einen Federantrieb in Verbindung mit einer Verriegelung durch Verriegelungs-Klinken entsprechend Fig. 5, sowie Rückstellen und Steuern des Überrollbügels mittels Bowden-Zug abhängig vom Dachverstellmechanismus, wobei in den Figurenteilen verschiedene betriebliche Zustände des Systems dargestellt sind, und
- Fig. 7: ebenfalls in vier Figurenteilen A - D in Längsschnitt-Darstellungen eine weitere Ausführungsform der Erfindung mit Aufstellen und Rückstellen des Überrollbügels durch einen vom Dachverstellmechanismus gesteuerten Bowdenzug in Verbindung mit dem Verriegelungs-System nach Fig. 5, wobei in den Figurenteilen ebenfalls verschiedene betriebliche Zustände des Systems dargestellt sind.

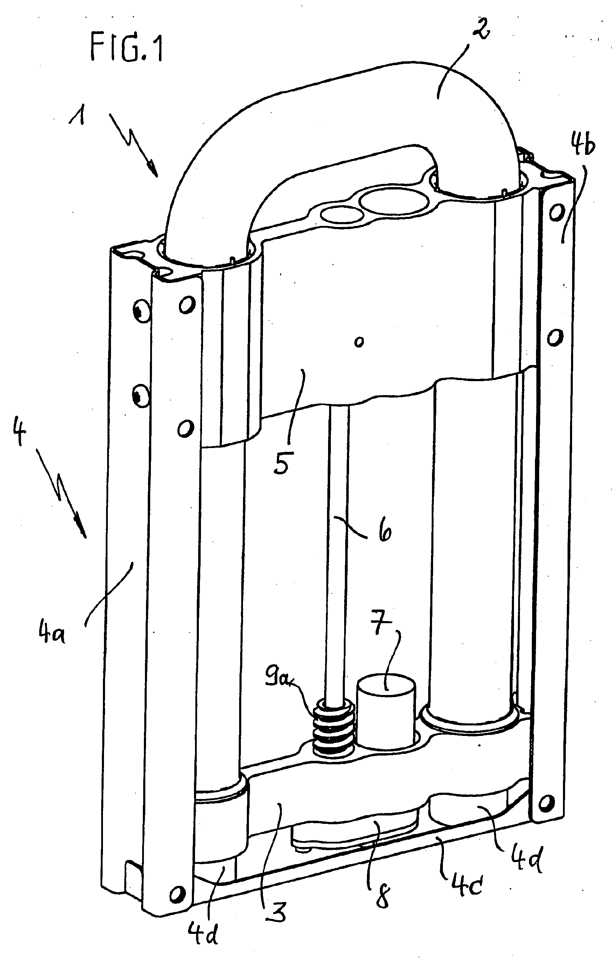

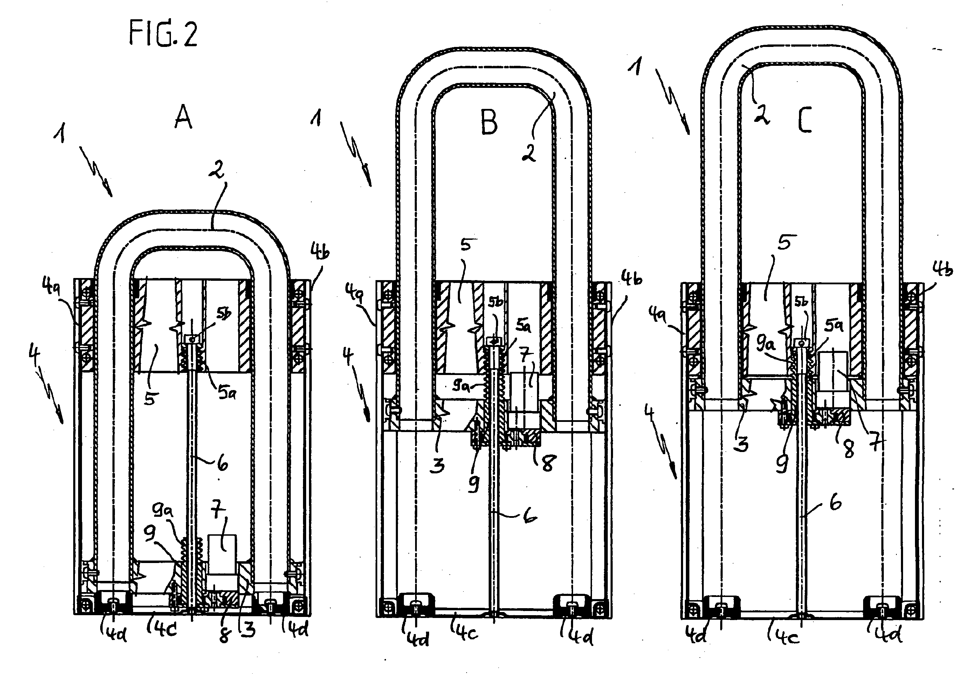

Die Figuren 1 und 2 zeigen ein erstes Ausführungsbeispiel eines sitzbezogenen, erfindungsgemäßen Überrollschutzsystems für Kraftfahrzeuge mit versenkbarem Dach, das einen U-förmigen Überrollbügel 1 aufweist, der mittels elektromotorischer Verstellung aus einer unteren Grund-Position bei geschlossenem Dach in eine höhere verriegelte Aufstellposition in Abhängigkeit vom Öffnungsvorgang des Daches angehoben werden kann, sowie der mittels des elektromotorischen Antriebes in seine Grundposition rückstellbar ist, bevor das Dach geschlossen wird. Da der Überrollbügel keinen sogenannten Crash-Schnellantrieb aufweist, d.h. bei einem drohenden Überschlag nicht sensorgesteuert aus der jeweiligen Position aufstellbar ist, sondern in der jeweiligen Position ohne weitere Aufstellung seine Schutzfunktion erfüllen muß, ist er mit den eingangs erläuterten starren Überrollbügeln "verwandt", mit der Besonderheit, daß er zwei jeweils "starre" Aufstellpositionen einnehmen kann.

Der Überrollbügel 1 besteht aus einem U-förmigen Bügelrohr 2 mit einem Bügelkopf und zwei Schenkeln, sowie einer Traverse 3, welche die freien Enden der Schenkel mechanisch fest miteinander verbindet.

Der Überrollbügel 1 ist in einem kassettenartigen Gehäuse 4 mit zwei im wesentlichen U-förmigen Seitenteilen 4 a, 4 b und einem Bodenteil 4 c sowie mit einem fest an den Seitenteilen angebrachten Führungsblock 5 geführt aufgenommen. Die beiden Schenkel werden dabei in entsprechenden Öffnungen des Führungsblockes geführt, wogegen die Traverse mit ihren seitlichen Enden geführt in den Seitenteilen aufgenommen ist. Das Gehäuse, der Führungsblock und die Traverse bestehen dabei zweckmäßig aus Strangpressprofilen, analog der bekannten Kassettenkonstruktion nach DE 100 40 642 C1 (= EP 1 182 098 A2) für Systeme mit Überrollbügeln, die sensorgesteuert mittels eines Crash-Antriebes in die obere Schutzposition aufstellbar sind.

Zwischen dem Führungsblock 5 und dem Gehäuseboden 4 c ist eine Gewindespindel 6 drehbar aber axial unverschiebbar gelagert. Die entsprechenden, in den Figurenteilen der Fig. 2 nur schematisch dargestellten Lager, z.B. das obere Lager 5 b im Führungsblock 5 besitzen einen konventionellen Aufbau.

Auf der Traverse 3 ist ein Elektromotor 7 mit Getriebe 8 fest angebracht. Ferner ist auf der Traverse eine Mutter 9, welche in Drehwirkverbindung mit der Gewindespindel 6 steht, drehbar in Wirkverbindung mit dem Getriebe aber axial unverschiebbar gelagert. Das Innengewinde der Mutter 9 kämmt mit dem Gewinde der Gewindespindel 6 derart, daß die Traverse 3 - und damit der Überrollbügel 1, in Abhängigkeit von der Drehrichtung des Elektromotors, auf der Gewindespindel 6 AUF bzw. AB fährt.

In der unteren Aufstellposition nach Fig. 1 und dem Figurenteil 2 A ruht die Traverse 3 quasi auf dem Bodenteil 4 c, wobei die Öffnungen für die Schenkel-Rohrenden in bodenseitig befestigten Zentrierstücken 4 d aus elastischem Material flatterfrei aufgenommen sind, d.h. der Überrollbügel kann bei einem Überschlag nicht eingedrückt werden. Befindet er sich jedoch in der oberen Aufstellposition (Figurenteil 2 C), könnte er unter Drehung der Gewindespindel nach unten ausweichen. Er muß daher in der oberen Aufstellposition verriegelt werden. Dazu ist im Führungsblock 5 ein Innengewinde 5 a, das im Durchmesser größer als derjenige der Gewindespindel 6 ist, ausgeformt, das zur Verriegelung des Überrollbügels in der angehobenen Position zum Einsatz kommt, indem es in Gewinde-Wirkverbindung mit einem Außengewinde 9 a, welches mit dem Innengewinde 5 a im Führungsblock 5 abgestimmt ist, tritt.

Um diese Verriegelung zu erreichen, müssen die VerriegelungsGewinde 5 a und 9 a und das Gewinde der Gewindespindel bezüglich der Gewindesteigung aufeinander abgestimmt sein. Das Gewinde der Gewindespindel 6 kann z.B. ein Trapezgewinde TR 10 x 2, 3-gängig und das Verriegelungsgewinde ein Trapezgewinde TR 22 x 6 1-gängig sein. Beide Gewinde haben somit die gleiche Steigung pro Umdrehung, was unbedingt notwendig ist, damit beim Hochfahren der Mutter 9 auf der Gewindespindel sich das Verriegelungs-Außengewinde 9 a der Mutter stoßfrei in das Innengewinde 5 a im Führungsblock 5 eindrehen kann.

Das dargestellte Überrollbügelsystem arbeitet wie folgt:

Nachdem das Dach des Fahrzeuges geöffnet und im Kofferraum abgelegt ist, wird der Elektromotor 7 bevorzugt selbsttätig, z.B. über einen Endschalter, mit der Bordspannung beaufschlagt. Die Gewindespindel dreht sich und stellt über die Mutter 9 und die Traverse 3 den Überrollbügel 1 auf. Kurz vor der höchsten Position (dargestellt im Figurenteil 2 B) dreht sich die Mutter 9 mit ihrem Außengewinde 9 a in den Führungsblock 5 ein und stellt somit die Verriegelung des Überrollbügels gegenüber dem Gehäuse her.

Wird das Dach wieder geschlossen, wird zuvor der Elektromotor umgepolt und wieder mit Versorgungsspannung versorgt, so daß der Überrollbügel in seine untere Aufstellposition gefahren wird, wobei die Zentrierstücke 4 d am Bodenteil 4 c für einen dämpfenden Anschlag des Überrollbügels sorgen. Das Dach kann dann ohne Behinderung durch den Überrollbügel geschlossen werden.

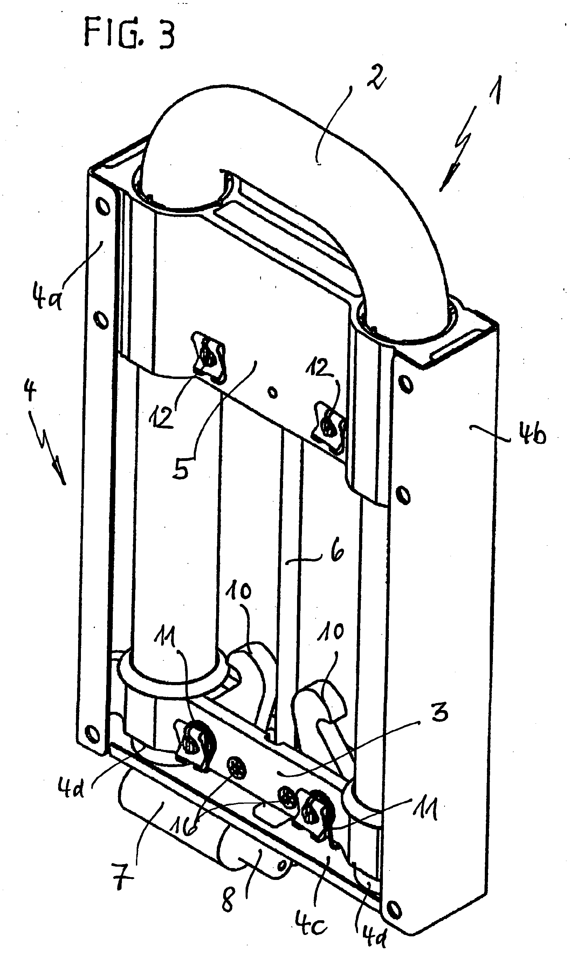

In den Figuren 3 bis 5 ist eine Variante der Ausführungsform nach Figuren 1 und 2 mit dem elektromotorischen Spindelantrieb, der mit der elektrischen Steuerung des Daches gekoppelt ist, dargestellt, die sich insbesondere durch die mechanische Verriegelung des bei geöffnetem Dach in der aufgestellten Position befindlichen Überrollbügels unterscheidet. Funktional gleiche Teile sind dabei mit denselben Bezugsziffern versehen.

Bei der vorliegenden Variante ist der elektrische Motor 7 mit Getriebe 8 unterhalb des Bodenteiles 4 c der fahrzeugfesten Kassette montiert. Das Getriebe 8 steht in Drehwirk-Verbindung mit der drehbar, aber axial nicht verschiebbar in der Kassette gelagerten Gewindespindel 6. Das obere Lager 5 b befindet sich dabei ebenfalls im Führungsblock 5. Mit der Gewindespindel in Wirkverbindung steht eine in der Variante T-förmig ausgebildete Mutter 9, die in der Traverse 3 des aufstellbaren Überrollbügels 1 drehfest, aber axial um einen Steuerhub von ca. 10 mm verschiebbar, gelagert ist.

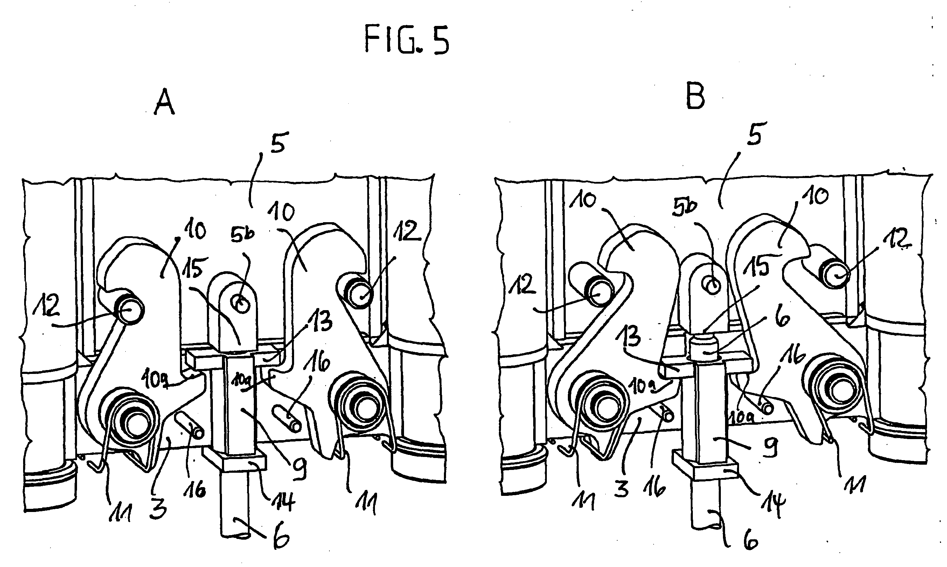

An der Traverse 3 sind weiterhin zwei Verriegelungs-Klinken 10, die jeweils durch eine Schenkelfeder 11 im verriegelnden Sinne vorgespannt sind (Fig. 5), drehbar angelenkt. Sie sollen den Überrollbügel 1 in aufgestellter Position gegen ein Einschieben unter Last sichern, indem sie, wie anhand der Fig. 5 näher erläutert wird, mit entsprechenden, im Führungsblock 5 angebrachten Verriegelungs-Bolzen 12, gesteuert durch die T-förmige Mutter 9, in lösbarem Wirkeingriff treten. Der Figurenteil A der Fig. 5 zeigt dabei den Zustand der Verriegelung, in welchem die Traverse 3 mit den Verriegelungs-Klinken 10 an der Unterkante des Führungsblockes 5, in welchem die Verriegelungsklinken 10 "eintauchen", anliegt. Der Figurenteil B zeigt den Zustand des Entklinkens zum anschließenden Einfahren des Überrollbügels 1 über seine Traverse 3.

Zum Betätigen der Verriegelungs-Klinken 10 durch die Mutter 9 besitzt diese einen oberen bzw. einen unteren, im wesentlichen rechteckigen Steueranschlag 13 bzw. 14. Der untere Steueranschlag 14 ist so gestaltet bzw. bemessen, daß er gegen die Traverse 3 zur Anlage kommen kann (Figurenteil 5 A) aber nicht in das Hohlprofil der Traverse 3 eintauchen kann. Der obere Steueranschlag 13 ist um 90° versetzt zu dem unteren Steueranschlag 14 angeordnet und so bemessen, daß er in die Traverse eintauchen kann, um mit den Verriegelungs-Klinken 10 in Wirkeingriff treten zu können.

Am oberen Lager 5 b der Gewindespindel ist zusätzlich ein fest am Führungsblock 5 montierter mittiger Anschlag 15 für die Traverse 3 vorgesehen, der zudem zusammen mit zwei Anschlagbolzen 16 ein zu weites Öffnen der Verriegelungs-Klinken 10 verhindert.

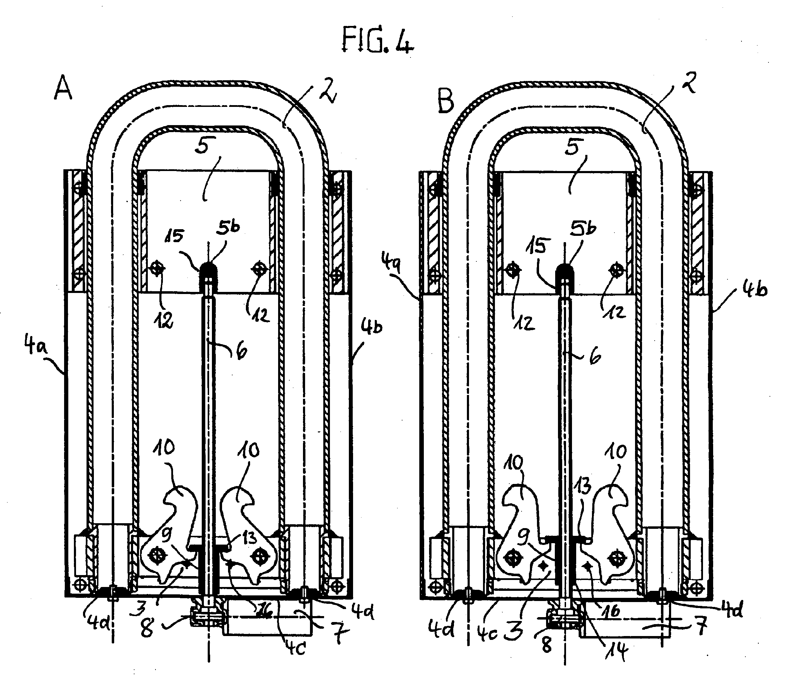

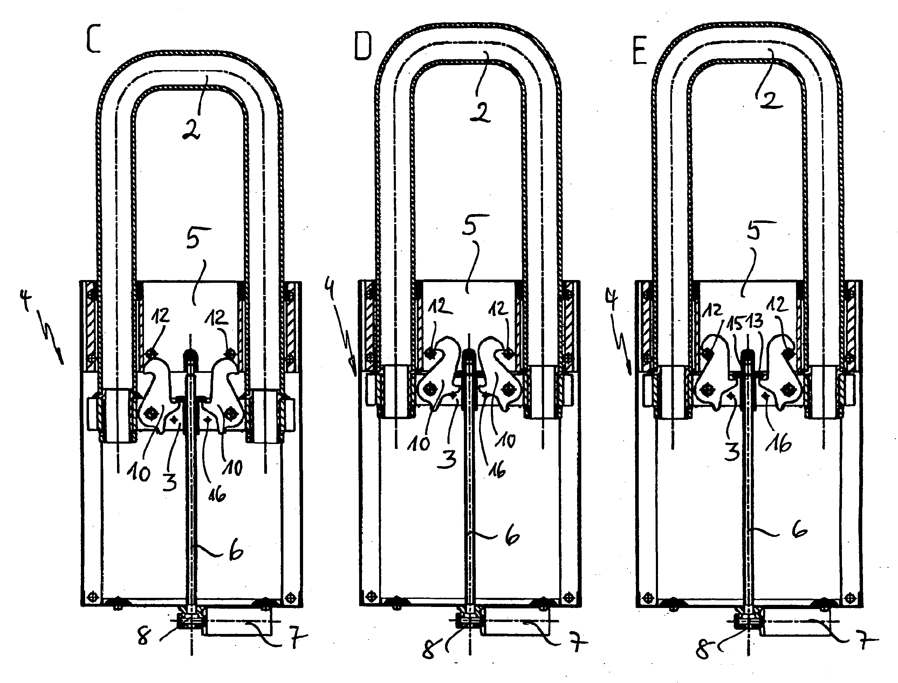

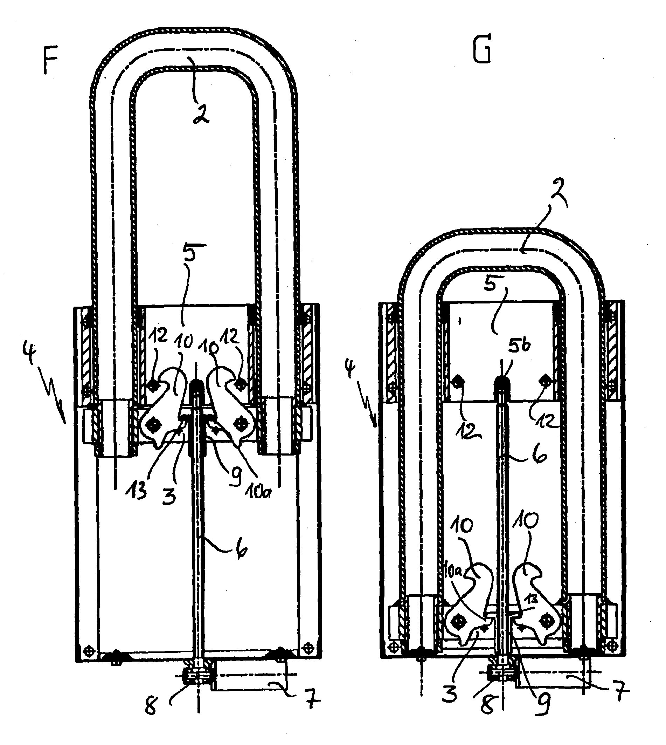

Der in den Figurenteilen A bis G der Fig. 4 dargestellte Funktionsablauf ist wie folgt: Dabei sind nur die jeweils relevanten Komponenten mit der zugehörigen Bezugsziffer versehen.

### Aufstellung:

Der Figurenteil A zeigt das Überrollbügel-System im Grundzustand bei geschlossenem Dach. Der obere, in der Traverse 3 eingefahrene Steueranschlag 13 hält die Verriegelungs-Klinken 10 im entklinkten Zustand.

Nach dem Öffnen des Daches wird der Elektromotor 7 von der elektrischen Dachsteuerung aktiviert, die Gewindespindel 6 dreht sich, die Mutter 9 fährt, zunächst um den Steuerhub, nach oben, bis der untere Steueranschlag 14 gegen die Unterseite der Traverse zur Anlage kommt. Zugleich hat der obere Steueranschlag dabei die Verriegelungs-Klinken 10 freigegeben, die unter der Wirkung der Schenkelfedern 11 in die Winkelposition "Verriegeln" drehen. Diesen Zustand zeigt der Figurenteil 4 B.

Beim weiteren Drehen der Gewindespindel wird über die an der Traverse 3 anliegende Mutter 9 eine aufstellende Kraft auf die Traverse 3 ausgeübt und damit der Überrollbügel 1 in der Kassette 4 bzw. im Führungsblock 5 aufgestellt. Vor dem Erreichen der obersten Position stoßen die Verriegelungs-Klinken 10 mit ihrer abgerundeten Außenkontur gegen die im Führungsblock 5 fest angebrachten Verriegelungs-Bolzen 12 (Figurenteil 4 C). Beim weiteren Aufstellen in die oberste Position (der obere Steueranschlag 13 liegt am mittigen Anschlag 15 des Führungsblockes 5 an) schwenken die Verriegelungs-Klinken 10 gegen die Vorspannkraft der Schenkelfedern 11 zurück (Figurenteil 4 D) und rasten dann unter Herstellen der Verriegelung auf den Verriegelungs-Bolzen 12 ein (Figurenteil 4 E und 5 A).

Der Motor 7 wird selbsttätig abgeschaltet, z.B. durch einen Endschalter.

### Überrollbügel ablegen:

Soll das Dach des Kraftfahrzeuges wieder aufgezogen werden, wird der Elektromotor 7 selbsttätig durch die Dachsteuerung in der Drehrichtung umgepolt und aktiviert. Die im umgekehrten Drehsinn sich drehende Gewindespindel 6 fährt zunächst um den Steuerhub nach unten. Der obere Steueranschlag 13 kommt dabei an den zur Gewindespindel hin gerichteten Wirk-Ansätzen 10 a der Verriegelungs-Klinken 10 zur Anlage und verschwenken diese im öffnenden Sinne (Figurenteile 4 F und 5 B). Der Überrollbügel ist damit vorbereitet zum Einziehen. Durch die sich weiterhin drehende Gewindespindel 6 zieht die Mutter 9 mit ihrem in der Traverse 3 anliegenden oberen Steueranschlag 13 die Traverse 3 und damit den Überrollbügel 1 nach unten, bis die eingefahrene Ausgangs-Grundposition des Überrollbügels erreicht ist (Figurenteil 4 G = 4 A). Der Elektromotor 7 wird dabei selbsttätig, z.B. mittels eines Endschalters, abgeschaltet.

Gemäß einer Untervariante der Ausführungsform nach den Figuren 3 bis 5 kann der Antrieb der Gewindespindel von oben erfolgen, d.h. der Elektromotor mit Getriebe ist am oberen Ende der Gewindespindel angeflanscht und das untere Ende der Gewindespindel ist in der Traverse drehbar gelagert.

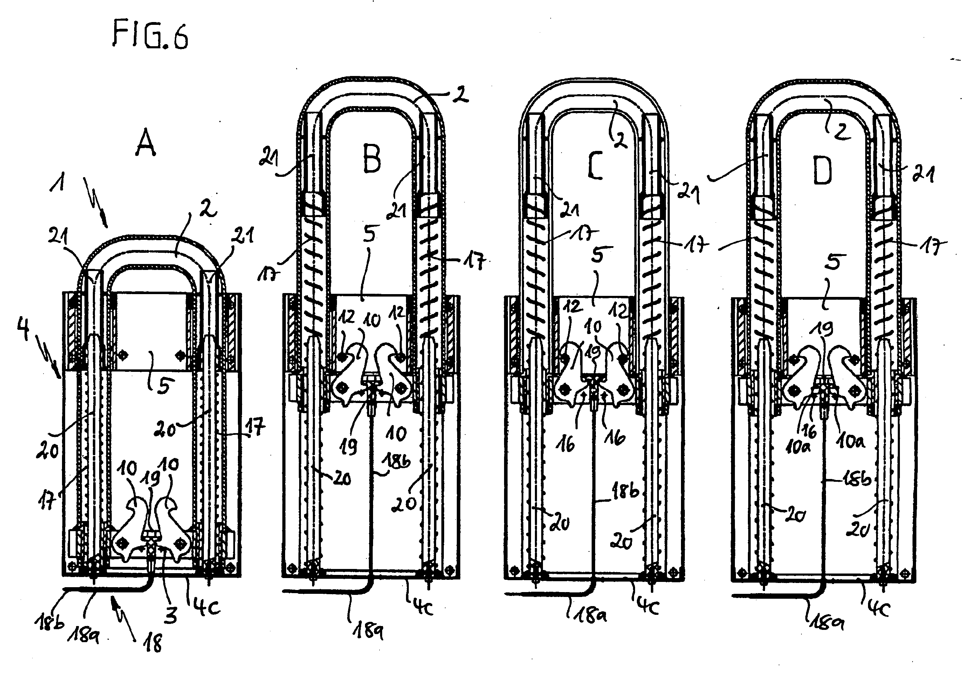

In der Figur 6 ist eine dritte Ausführungsform der Erfindung in vier Betriebszuständen gemäß den Figurenteilen A bis D dargestellt. Der kassettenartige Aufbau 4 des Überrollbügelsystems mit Führungsblock 5, und die Verriegelung des in der obersten Position aufgestellten Überrollbügels 1 mit Traverse 3 mittels der Verriegelungs-Klinken 10 entspricht der Ausführungsform nach den Figuren 3 bis 5, weswegen funktionsgleiche Komponenten mit demselben Bezugszeichen versehen sind. Unterschiedlich ist das Antriebssystem zum Aufstellen und Ablegen (Rückstellen) des Überrollbügels 1. Anstelle eines elektromotorischen Spindelantriebes sieht die Ausführungsform nach Fig. 6 beim Öffnen des Daches ein Aufstellen des Überrollbügels 1 mit vorgespannten Aufstellfedern 17, gesteuert durch einen Bowdenzug 18, der mit dem Dachverstell-Mechanismus mechanisch gekoppelt ist, und der auch beim Schließen des Daches den Überrollbügel in die Ausgangslage zurückzieht, vor. Der Schlauch 18 a des Bowdenzuges ist am Boden 4 c des Kassettengehäuses 4 fest angebracht. Das freie Ende des Zugseiles 18 b des Bodenzuges besitzt eine T-förmige Haltegabel 19 mit einer Konfiguration analog der Mutter 9 im Ausführungsbeispiel nach den Figuren 3 bis 5. Die T-förmige Haltegabel 19 bewirkt daher ebenfalls, daß im Grundzustand (Figurenteil 5 A), die beiden federvorgespannten Verriegelungs-Klinken 10 sich im geöffneten Zustand befinden. Die T-förmige Haltegabel 19 hält weiterhin den Überrollbügel 1 über dessen Traverse 3 entgegen der Kraft der beiden Aufstellfedern 17 im Grundzustand, weil das andere Ende des zugehörigen Zugseiles 18 b des Bowdenzuges 18 fest eingespannt ist.

Die beiden Aufstellfedern 17 sind in den beiden Schenkeln des U-förmigen Bügelrohres 2 aufgenommen und werden durch am Bodenteil 4 c befestigte Federführungsbolzen 20 geführt. Die beiden Aufstellfedern 17 stützen sich jeweils unten am Bodenteil 4 c und oben an einem Einsatz 21 im oberen Teil der Schenkel ab. Bei den Aufstellfedern 17 handelt es sich nicht um sogenannte Crash-Federn wie im Fall der sensorgesteuerten Kassetten-Systeme. Diese müssen einen Überrollbügel im Gefahrenfall in weniger als einer halben Sekunde aufstellen. Für das Aufstellen der Aufstelffedern 17 nach Öffnen des Daches steht eine wesentliche größere Zeitspanne, z.B. ca. 5 Sekunden zur Verfügung, so daß die Federkraft wesentlich niedriger sein kann, was auch das Einfahren des Überrollbügels in die Grundposition bei geschlossenem Dach ohne zusätzliche Hilfsmittel ermöglicht.

Im Rahmen des Öffnens des Daches wird von dem Dachverstell-Mechanismus das Zugseil 18 b freigegeben. Die Traverse 3 mit dem Bügelrohr 2 wird unter Ausziehen des Zugseiles 18 b aufgestellt, wobei die Verriegelungs-Klinken noch offen sind (Figurenteil 5 B). Danach wird der Überhub der Haltegabel 19 in der zugehörigen Öffnung der Traverse 3 freigegeben, wodurch die beiden Verriegelungs-Klinken 10 federbelastet nach außen schwenken und mit den Verriegelungs-Bolzen 12 verklinken. Dadurch ist, wie im Ausführungsbeispiel nach den Figuren 3 - 5, der ausgefahrene Überrollbügel gegen Zurückfahren bei einer Belastung im Überschlag gesichert (Figurenteil 6 C).

Vor dem Schließen des Daches wird das Zugseil 18 b des Bowdenzuges, gesteuert vom Dachverstell-Mechanismus, angezogen und fährt zunächst den Überhub zurück, damit durch die Haltegabel 19 die Verriegelungs-Klinken 10 wieder entklinkt werden und an den Anschlagbolzen 16 anliegend (Figurenteil 5 D). Dadurch, daß das T-Stück der Haltegabel an den Wirkansätzen 10 a der Verriegelungs-Klinken 10 anliegt, kann das Zugseil 18 b das Bügelrohr gegen die Kraft der Aufstellfedern 17 in die Grundstellung nach Figurenteil 5 A ziehen.

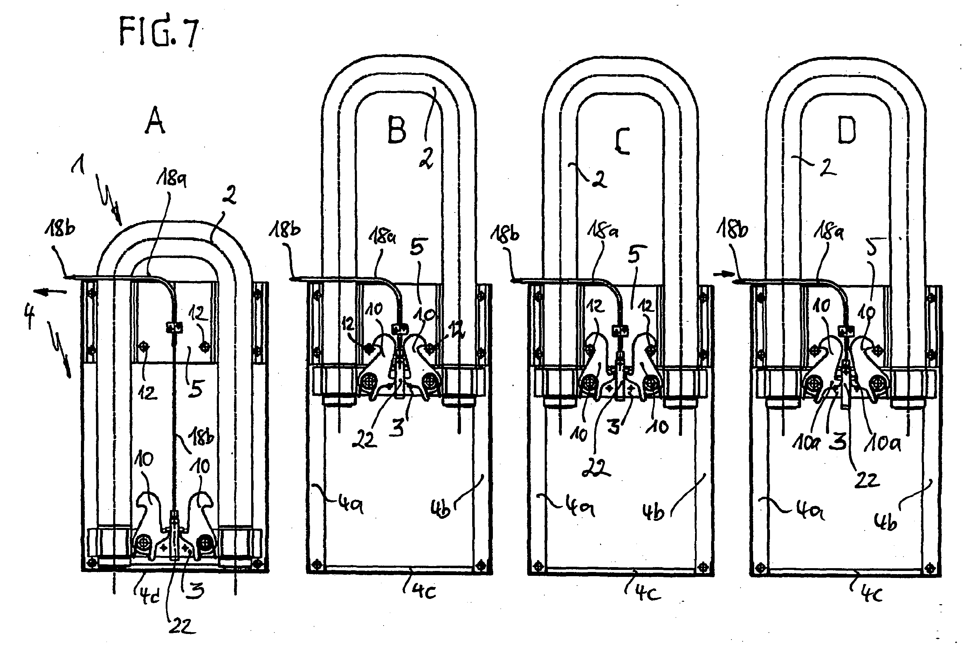

In der Figur 7 ist eine vierte Ausführungsform der Erfindung in vier Betriebszuständen gemäß den Figurenteilen A bis D dargestellt. Der kassettenartige Aufbau 4 des Überrollbügelsystems mit Führungsblock 5, und die Verriegelung des in der obersten Position aufgestellten Überrollbügels 1 mit Traverse 3 mittels der Verriegelungs-Klinken 10 entspricht der Ausführungsform nach den Figuren 3 bis 5 sowie nach Fig. 6, weswegen funktionsgleiche Komponenten mit demselben Bezugszeichen versehen sind. Auch weist die vierte Ausführungsform eine Betätigung der Verriegelungs-Klinken 10 und der Traverse 3 des Überrollbügels mittels eines Bowdenzuges 18 auf; sie ist daher letztlich eine Untervariante der dritten Ausführungsform nach Fig. 6. Im Gegensatz zu dieser dritten Ausführungsform weist die Ausführung nach Fig. 7 keine Aufstellfedern auf, d.h. beim Öffnen des Daches stellt sich der Überrollbügel nicht selbsttätig auf, sondern er wird durch das Zugseil 18 b des Bowdenzuges 18, das mit dem Dachverstellmechanismus gekoppelt ist, sei es direkt mechanisch oder mittelbar elektrisch mittels eines elektrischen Antriebes nach Art einer Winde, hochgezogen.

In der Grundstellung (Figurenteil 7 A) wird der Überrollbügel nicht über eine gesonderte Vorrichtung gehalten, sondern er ist letztlich nur "abgelegt" und ruht dabei aufgrund seines Eigengewichtes auf dem Bodenteil 4 c des Gehäuses. In Fig. 7 nicht dargestellte Zentrierstücke 4 d nach der 1. Ausführungsform (Fig. 2) zentrieren dabei die Schenkelrohre des Bügels im Grundzustand.

Der Schlauch 18 a des Bowdenzuges ist am karosseriefesten Führungsblock 5 befestigt. Das Zugseil 18 b ist am Zugende mit einem T-förmigen Haltestück 22 verbunden sowie ist mit dem anderen Ende mit dem Dachverstell-Mechanismus auf geeignete Weise gekoppelt. Das T-förmige Haltestück 22 ist analog der T-förmigen Mutter 9 nach Fig. 5 ausgebildet mit zwei um 90° versetzt angeformten Steueranschlägen. Auch die Funktionsweise ist entsprechend.

Die Verriegelungs-Klinken 10 nehmen dabei grundsätzlich die Schließstellung ein und werden nur zum Entriegeln kurzzeitig geöffnet.

Die in Fig. 7 dargestellte Ausführungsform arbeitet wie folgt:

Der Figurenteil 7 A zeigt den abgelegten Überrollbügel 1, der untere Steuerhub in der Traverse 3 ist gefahren und der untere Steueranschlag des Haltestückes 22 ist an der Unterkante der Traverse zur Anlage gekommen.

Beim Öffnen des Daches wird zwangsbetätigt das Zugseil 18 b des Bowdenzuges in Pfeilrichtung eingezogen. Dadurch zieht dieses über das Haltestück 22 mit seinem unteren Steueranschlag die Traverse 3 nach oben und stellt damit den Überrollbügel 1 auf. Der Figurenteil 7 B zeigt dabei den aufgestellten Überrollbügel unmittelbar vor der höchsten Aufstellposition, d.h. die Verriegelungs-Klinken 10 stehen unmittelbar vor der Verklinkung mit den Verriegelungsbolzen 12, die nach einem kurzen weiteren Anheben der Traverse dann erreicht wird (Figurenteil C).

Zum Rückstellen des Überrollbügels vor dem Schließen des Daches wird das Zugseil 18 b des Bowdenzuges, gesteuert durch den Dachverstell-Mechanismus, nach unten geschoben. Dabei wird zunächst nur das T-förmige Haltestück um den Steuer- oder Schalthub von ca. 3 - 5 mm nach unten geschoben, bis der obere Steueranschlag des Haltestückes mit den Wirkansätzen 10 a der Verriegelungs-Klinken 10 in Wirkeingriff tritt und diese öffnet (Figurenteil 7 D). Das Zugseil 18 b des Bowdenzuges kann dann die Traverse 3 mit dem Bügelrohr 2 nach unten schieben, und unterstützt durch sein Eigengewicht fährt dann der Überrollbügel in seine Grundstellung nach Figurenteil 7 A ein.

Das Fahren des Steuer- oder Schalthubes mit den Steueranschlägen des T-förmigen Haltestückes 22 läuft dabei im Detail in gleicher Weise wie anhand der Figur 5 beschrieben ab.

Im vorstehenden wurde ein neuartiges Überrollschutzsystem mit einem Überrollbügel beschrieben, der in Abhängigkeit vom Öffnungs- bzw. Schließvorgang des Cabriolet- oder Sportwagendaches, automatisch in Wirk- oder Ruhestellung transportiert wird.

Der Überrollbügel hat keine sensorgesteuerte Crashaufstellung. Nach dem Öffnen des Daches wird der Überrollbügel automatisch in seine Wirkposition aufgestellt und dort verriegelt. Vor dem Schließen des Daches wird der Überrollbügel automatisch entriegelt und in seine Ruheposition eingezogen. Die Verstellung des Überrollbügels erfolgt durch eine Steuerung, die mit der Steuerung des Daches gekoppelt ist oder aber durch eine direkte mechanische Koppelung mit dem Dachantrieb. Dabei wurden verschiedene Ausführungsformen beschrieben, die sich wie folgt zusammenfassen lassen:
1. Aufstellung und Rückstellung mittels Elektromotor und Spindel, elektrisch gesteuert von der Dachsteuerung, mit zwei Varianten hinsichtlich der Verriegelung.
2. Aufstellung mittels Aufstellfeder und Rückstellung sowie Steuerung mittels Bowdenzug, der direkt an dem Dachverstellmechanismus angekoppelt ist.
3. Aufstellung und Steuerung mittels Bowdenzug, der ebenfalls direkt an dem Rückstellung-Dachverstellmechanismus angekoppelt ist.

In den Zeichnungen sind Überrollschutzsysteme mit einem U-förmigen Überrollbügel dargestellt. Prinzipiell ist es auch denkbar, anstelle dieses Überrollbügels einen Überrollkörper in Form eines Kastenprofils zu verwenden. Auch sind andere Verriegelungs-Konstruktionen denkbar.

### Bezugszeichenliste

- 1: Überrollbügel
- 2: U-förmiges Bügelrohr
- 3: Traverse
- 4: Gehäuse
- 4 a, b: U-förmige Seitenteile
- 4 c: Bodenteil
- 4 d: Zentrierstücke
- 5: Führungsblock
- 5 a: Innengewinde
- 5 b: oberes Lager der Gewindespindel
- 6: Gewindespindel
- 7: Elektromotor
- 8: Getriebe
- 9: Mutter
- 9 a: Außengewinde
- 10: Verriegelungs-Klinken
- 10 a: Wirkansätze
- 11: Schenkelfedern
- 12: Verriegelungs-Bolzen
- 13: oberer Steueranschlag
- 14: unterer Steueranschlag
- 15: mittiger Anschlag
- 16: Anschlagbolzen
- 17: Aufstellfedem
- 18: Bowdenzug
- 18 a: Schlauch
- 18 b: Zugseil
- 19: Haltegabel
- 20: Federführungsbolzen
- 21: Einsatz
- 22: Haltestück

## Patentansprüche

1. Überrollschutzsystem für Kraftfahrzeuge mit einem Dach, das motorisch mittels eines Dachverstellmechanismus versenkbar und aufziehbar ist, bestehend aus eine fahrzeugsitzbezogenen Überrollkörper (1) ohne sensorgesteuerten Crash-Antrieb, der gekoppelt mit dem Dachverstellmechanisms zwangsgesteuert selbsttätig zwischen einer ersten starren Position bei geschlossenem Dach und einer zweiten, angehobenen starren Position bei geöffnetem Dach verfahrbar ist, **dadurch gekennzeichnet, daß** der Überrollkörper (1) in einem fahrzeugfesten, kassettenartigen Gehäuse (4) geführt aufgenommen ist und ihm einmal ein mit dem Dachverstellmechanismus gekoppelter Antrieb (7 - 9; 18) zum betrieblich vertikalen Verstellen in dem Gehäuse (4) sowie ihm zum anderen eine positionsabhängig zwangsgesteuerte Verriegelungseinrichtung (10, 11, 12) zum Verriegeln in der angehobenen Position zugeordnet ist.

2. Überrollschutzsystem nach Anspruch 1, **dadurch gekennzeichnet, daß** der Überrollkörper (1) durch ein U-förmiges Bügelrohr (2) gebildet ist, dessen Schenkelenden über eine Traverse (3) miteinander verbunden sind und das kassettenartige Gehäuse (4) zwei U-förmige Seitenteile (4 a, b) aufweist, welche unten über ein Bodenteil (4 c) miteinander verbunden sind, zwischen denen oben ein Führungsblock (5) befestigt ist, der Öffnungen zum Führen der Schenkel des Bügelrohres (2) aufweist, und in welchen die Enden der Traverse (3) geführt aufgenommen sind.

3. Überrollschutzsystem nach Anspruch 1 oder 2, **dadurch gekennzeichnet, daß** der Antrieb sowohl zum Aufstellen als auch zum Rückstellen durch einen elektromotorisch angetriebenen, elektrisch mit der Dachsteuerung verbundenen : Mutter/Gewindespindel-Trieb (6, 7, 8, 9) gebildet ist.

4. Überrollschutzsystem nach Anspruch 1 oder 2, **dadurch gekennzeichnet, daß** der Antrieb zum Aufstellen durch einen im Sekundenbereich aufstellenden Federantrieb (17) und zum Zurückstellen durch einen mit dem Dachverstellmechanismus gekoppelten Bowdenzug gebildet ist.

5. Überrollschutzsystem nach Anspruch 1 oder 2, **dadurch gekennzeichnet, daß** der Antrieb sowohl zum Aufstellen als auch zum Zurückstellen durch einen mit dem Dachverstellmechanismus gekoppelten Bowdenzug (18) gebildet ist.

6. Überrollschutzsystem nach Anspruch 3, **dadurch gekennzeichnet, daß** die Gewindespindel (6) des Triebes drehbeweglich aber axial nicht verschiebbar in dem Gehäuse (4) gelagert ist und die auf der Gewindespindel aufgenommene Mutter (9), drehbar gelagert, mit dem Überrollkörper verbunden ist.

7. Überrollschutzsystem nach Anspruch 2 und 6, **dadurch gekennzeichnet, daß** die Gewindespindel (6) mit einem Ende am Führungsblock (5) und mit dem anderen Ende auf dem Bodenteil (4 c) des Gehäuses drehbar gelagert ist, und die zugehörige Mutter (9) auf der Traverse (3) gelagert ist, auf der auch der Elektromotor (7) mit zugehörigem Getriebe (8) angebracht ist.

8. Überrollschutzsystem nach Anspruch 7, **dadurch gekennzeichnet, daß** die Gewindespindel (6) des Mutter/Gewindespindel-Triebes mit der Abtriebswelle eines Elektro-Getriebemotors (7, 8) verbunden ist und die Mutter (9) drehfest auf der Traverse (3) gelagert ist.

9. Überrollschutzsystem nach Anspruch 7, **dadurch gekennzeichnet, daß** die Mutter (9) des Mutter/Gewindespindel-Triebes drehbar auf der Traverse gelagert ist und mit der Abtriebswelle eines Elektro-Getriebemotors (7, 8) verbunden ist.

10. Überrollschutzsystem nach Anspruch 9, **dadurch gekennzeichnet, daß** die Mutter (9) zylindrisch ausgebildet ist und zusätzlich ein Außengewinde (9 a) aufweist und daß im Führungsblock (5) im oberen Lagerbereich (5 b) der Gewindespindel (6) ein entsprechendes Innengewinde (5 a) zum Eindrehen des Außengewindes (9 a) der Mutter (9) in der angehobenen Position des Überrollbügels (1) zwecks Verriegeln des Überrollbügels angebracht ist, wobei die Steigung pro Umdrehung des Gewindes der Gewindespindel (6) gleich derjenigen des Verriegelungsgewindes (9 a, 5 a) ist.

11. Überrollschutzsystem nach Anspruch 8, **dadurch gekennzeichnet, daß** die Mutter (9) T-förmig mit zwei beabstandet, um 90° versetzt angeordneten Steueranschlägen (13, 14) ausgebildet ist, und drehfest, um einen vorgegebenen Steuerhub axial verschiebbar, in der Traverse (3) gelagert Ist.

12. Überrollschutzsystem nach Anspruch 11, **dadurch gekennzeichnet, daß** in der Traverse (3) weiterhin zwei federvorgespannte Verriegelungs-Klinken (10) drehbar angelenkt sind, die, positionsgesteurt durch die Steueranschläge (13, 14) der Mutter (9), in verriegelnde Wirkverbindung mit zugeordneten, am Führungsblock (5) fest angebrachten Verriegelungs-Bolzen (12) bringbar sind.

13. Überrollschutzsystem nach Anspruch 2 und 4, **dadurch gekennzeichnet, daß** innerhalb der Schenkelrohre des U-förmigen Bügelrohres (2) jeweils eine Druckfeder (17), geführt durch einen am Bodenteil (4 c) des Gehäuses fest angebrachten Federführungsbolzen (20), aufgenommen ist, und am Zugende des Zugseiles (18 b) des Bowdenzuges, eine um einen vorgegebenen Steuerhub axial verschiebbar in der Traverse (3) aufgenommene, T-förmige Haltegabel (19), konfiguriert wie die T-förmige Mutter (9) nach Anspruch 11, angebracht ist, die positionsgesteuert in Wirkverbindung mit zwei Verriegelungs-Klinken (10) nach Anspruch 12 bringbar ist, derart, daß sie im Grundzustand die Traverse (3) gegen die Kraft der Druckfedern (17) niederhält und in der angehobenen Position des Überrollbügels die Klinken (10) mit den Bolzen (12) verriegelt und nach Aufhebung der Verriegelung am Ende des Steuerhubes zwangsgesteuert durch den Dachverstellmechanismus den aufgestellten Überrollbügel einzieht.

14. Überrollschutzsystem nach Anspruch 2 und 5, **dadurch gekennzeichnet, daß** der Schlauch (18 a) des Bowdenzuges (18) am Führungsblock (5) befestigt ist und am Zugende des Zugseiles (18 a), ein um einen vorgegebenen Steuerhub axial verschiebbar in der Traverse (3) aufgenommenes T-förmiges Haltestück (22), konfiguriert wie die T-förmige Mutter (9) nach Anspruch 11, angebracht ist, das postionsgesteuert in Wirkverbindung mit zwei Verriegelungs-Klinken (10) nach Anspruch 12 bringbar ist, derart, daß das Haltestück (22) nach dem Öffnen des Daches über entriegelte Verriegelungs-Klinken (10) die Traverse (3) nach oben zieht, in der angehobenen Position des Überrollbügels die Klinken (10) mit den Bolzen (12) verriegelt und am Ende des Steuerhubes zwangsgesteuert durch den Dacherstellmechanismus die Verriegelungs-Klinken (10) entriegelt und die Traverse (3) nach unten schiebt.

## Claims

1. A roll-bar system for vehicles comprising a roof which can be retracted and raised in a motor-driven manner by means of a roof displacement mechanism, consisting of a
roll-bar body (1) associated with each seat, without a sensor-controlled crash drive and which can be forcibly displaced autonomously, linked to the roof displacement mechanism, between a first rigid position in which the roof is closed and a second raised, rigid position in which the roof is open, **characterized in that** the roll-bar body (1) is accommodated and guided in a cassette-type housing (4) permanently attached to the vehicle and associated firstly with a drive (7 - 9; 18) coupled to the roof displacement mechanism and used to displace the roll-bar body vertically in the housing (4) and secondly with a position-dependent, forcibly guided locking device (10, 11, 12), which is used to lock said body in the raised position.

2. The roll-bar system according to Claim 1, **characterized in that** the roll-bar body (1) is formed by a U-shaped tubular stirrup (2), the legs of which are connected to each other by a crosshead (3) and the cassette-type housing (4) having two U-shaped side parts (4 a, b) which are connected to each other at the bottom by a base part (4 c) and between which a guide block (5) is mounted at the top which has apertures to guide the legs of the tubular stirrup (2) and into which the ends of the crosshead (3) are received in a guided manner.

3. The roll-bar system according to Claim 1 or 2, **characterized in that** the drive for both raising and lowering takes the form of a nut and threaded spindle drive (6, 7 8, 9) driven by an electric motor electrically connected to the roof control system.

4. The roll-bar system according to Claim 1 or 2, **characterized in that** the drive takes the form of a spring drive (17), which rises in a matter of seconds, for raising and a Bowden cable coupled to the roof displacement mechanism for lowering.

5. The roll-bar system according to Claim 1 or 2, **characterized in that** the drive for both raising and lowering takes the form of a Bowden cable (18) linked to the roof displacement mechanism.

6. The roll-bar system according to Claim 3, **characterized in that** the threaded spindle (6) of the drive is borne in a rotatable manner but is not axially displaceable in the housing (4) and the nut (9) received on the threaded spindle is connected with the roll-bar body in a rotatable manner.

7. The roll-bar system according to Claims 2 and 6, **characterized in that** one end of the threaded spindle (6) is borne on the guide block (5) and the other end on the base part (4 c) of the housing, both in a rotatable manner, and the appropriate nut (9) is borne on the crosshead (3), on which the electric motor (7) and relevant gear (8) are also mounted.

8. The roll-bar system according to Claim 7, **characterized in that** the threaded spindle (6) of the nut/threaded spindle drive is connected to the drive shaft of a geared electric motor (7, 8) and the nut (9) is borne on the crosshead (3) so that it will not rotate.

9. The roll-bar system according to Claim 7, **characterized in that** the nut (9) of the nut/threaded spindle drive is borne on the crosshead in a rotatable manner and is connected to the drive shaft of a geared electric motor (7, 8).

10. The roll-bar system according to claim 9, **characterized in that** the nut (9) is cylindrical and has an additional external thread (9 a), and that a corresponding internal thread (5 a) is present in the guide block (5) in the upper bearing area (5 b) of the threaded spindle (6) for insertion of the external thread (9 a) of the nut (9) in the raised position of the roll-bar body (1) to lock the roll-bar body, the rise per revolution of the thread of the threaded spindle (6) being equal to that of the locking thread (9 a, 5 a).

11. The roll-bar system according to Claim 8, **characterized in that** the nut (9) is T-shaped with two control stops (13, 14) spaced apart from each other and arranged offset by 90° and is borne on the crosshead (3) so that it will not rotate and may be displaced axially by a specific control stroke.

12. The roll-bar system according to Claim 11, **characterized in that** two springloaded locking pawls (10) are also articulated to the crosshead (3) in a rotatable manner and can be mechanically connected to lock dedicated locking pins (12) permanently attached to the guide block (5), position-controlled by the control stops (13, 14) of the nut (9).

13. The roll-bar system according to Claims 2 and 4 **characterized in that** a pressure spring (17), guided by a spring guide pin (20) permanently attached to the base part (4 c) of the housing is accommodated in each leg of the U-shaped tubular stirrup (2), and a T-shaped retaining bracket (19) accommodated in the crosshead (3) and axially displaceable by a specific control stroke is attached to the pulling end of the load cable (18 b) of the Bowden cable, configured like the T-shaped nut (9) according to Claim 11, which may be mechanically connected to two locking pawls (10) according to Claim 12, position controlled, so that it restrains the crosshead (3) against the force of the pressure springs (17) in the basic state and locks the pawls (10) in the pins (12) in the raised state, and withdraws the raised roll-bar forcibly by means of the roof displacement mechanism when unlocking takes place at the end of the control stroke.

14. The roll-bar system according to Claims 2 and 5, **characterized in that** the sheath (18 a) of the Bowden cable (18) is attached to the guide block (5) and that a T-shaped retainer (22) configured like the T-shaped nut (9) according to Claim 11, axially displaceable by a specific control stroke and accommodated in the crosshead (3), is attached to the pulling end of the load cable (18 a) and may be mechanically connected to two locking pawls (10) according to Claim 12, controlled by position, in such a way that the retainer (22) pulls the crosshead (3) upwards by means of unlocked locking pawls after the roof has been opened, locks the pawls (10) in the pins (12) in the raised position of the roll bar and is forced by the roof displacement system to unlock the locking pawls (10) and push the crosshead (3) downwards at the end of the control stroke.

## Revendications

1. Système de protection anticapotage pour véhicules automobiles avec un toit escamotable et fermant de façon motorisée au moyen d'un mécanisme d'ajustage de toit, système se composant d'un corps anticapotage (1) sans actionneur de collision commandé par capteur qui est en rapport direct avec le siège du véhicule et qui, couplé au mécanisme d'ajustage de toit, peut être déplacé automatiquement par commande forcée entre une première position rigide avec toit fermé et une deuxième position rigide relevée avec toit ouvert, **caractérisé en ce que** le corps anticapotage (1) est logé de façon guidée dans un boîtier (4) en forme de cassette monté de manière fixe sur le véhicule, et **en ce que** lui sont affectés d'une part un actionneur (7 - 9 ; 18) couplé au mécanisme d'ajustage de toit pour assurer le mouvement vertical en service dans le boîtier (4) ainsi que, d'autre part, un organe de verrouillage (10, 11, 12) à commande forcée en fonction de la position pour le verrouillage à la position relevée.

2. Système de protection anticapotage selon la revendication 1, **caractérisé en ce que** le corps anticapotage (1) est formé par un étrier tubulaire (2) en forme de U dont les extrémités des branches sont reliées l'une avec l'autre par une traverse (3), et **en ce que** le boîtier (4) en forme de cassette présente deux pièces latérales (4 a, b) en forme de U qui sont reliées l'une avec l'autre en bas par l'intermédiaire d'une pièce de fond (4 c) et entre lesquelles est fixé en haut un bloc de guidage (5) qui présente des ouvertures pour le guidage des branches de l'étrier tubulaire (2), et dans lequel sont logées de façon guidée les extrémités de la traverse (3).

3. Système de protection anticapotage selon la revendication 1 ou 2, **caractérisé en ce que** l'actionneur est formé aussi bien pour le relèvement que pour le retrait par une commande à écrou/broche filetée (6, 7, 8, 9) entraînée par moteur électrique et reliée électriquement à la commande de toit.

4. Système de protection anticapotage selon la revendication 1 ou 2, **caractérisé en ce que** l'actionneur est formé pour le relèvement par une commande à ressort (17) qui relève en l'espace de quelques secondes et, pour le retrait, par un câble Bowden couplé au mécanisme d'ajustage de toit.

5. Système de protection anticapotage selon la revendication 1 ou 2, **caractérisé en ce que** l'actionneur est formé aussi bien pour le relèvement que pour le retrait, par un câble Bowden (18) couplé au mécanisme d'ajustage de toit.

6. Système de protection anticapotage selon la revendication 3, **caractérisé en ce que** la broche filetée (6) de la commande est logée de manière mobile en rotation, sans pour autant être décalable axialement, dans le boîtier (4), et **en ce que** l'écrou (9) logé sur la broche filetée, qui est pivotant, est relié au corps anticapotage.

7. Système de protection anticapotage selon les revendications 2 et 6, **caractérisé en ce que** la broche filetée (6) est pivotant avec une extrémité sur le bloc de guidage (5) et l'autre extrémité sur la pièce de fond (4 c) du boîtier, et **en ce que** l'écrou (9) correspondant est logé sur la traverse (3) sur laquelle est également monté le moteur électrique (7) avec la transmission (8) correspondante.

8. Système de protection anticapotage selon la revendication 7, **caractérisé en ce que** la broche filetée (6) de la commande à écrou/broche filetée est reliée à l'arbre entraîné d'un moto-réducteur électrique (7, 8) et l'écrou (9) est logé de manière rigide en torsion sur la traverse (3).

9. Système de protection anticapotage selon la revendication 7, **caractérisé en ce que** l'écrou (9) de la commande à écrou/broche filetée est logé de manière rotative sur la traverse et est relié à l'arbre entraîné d'un moto-réducteur électrique (7, 8).

10. Système de protection anticapotage selon la revendication 9, **caractérisé en ce que** l'écrou (9) est cylindrique et présente en outre un filetage extérieur (9 a), et **en ce qu'**est réalisé dans le bloc de guidage (5), dans la partie supérieure du palier (5 b) de la broche filetée (6), un filetage intérieur (5 a) correspondant pour le vissage du filetage extérieur (9 a) de l'écrou (9) à la position relevée de l'arceau de sécurité (1) en vue du verrouillage de l'arceau de sécurité, étant donné que le pas par tour de filet de la broche filetée (6) est égal à celui du filet de verrouillage (9 a, 5 a).

11. Système de protection anticapotage selon la revendication 8, **caractérisé en ce que** l'écrou (9) est en forme de T avec deux butées de commande (13, 14) écartées l'une de l'autre et disposées avec un décalage de 90° l'une par rapport à l'autre, et est logé, rigide en torsion, de manière axialement décalable dans le cadre d'une course de commande prédéfinie, dans la traverse (3).

12. Système de protection anticapotage selon la revendication 11, **caractérisé en ce que** sont en outre articulés de manière rotative dans la traverse (3) deux cliquets de verrouillage (10) à ressorts précontraints qui peuvent être mis, avec commande de positionnement, à travers les butées de commande (13, 14) de l'écrou (9), en liaison effective verrouillante avec des boulons de verrouillage (12), qui leur sont affectés, montés de manière fixe sur le bloc de guidage (5).

13. Système de protection anticapotage selon les revendications 2 et 4, **caractérisé en ce qu'**est chaque fois logé au sein des branches tubulaires de l'étrier tubulaire (2) en forme de U un ressort de pression (17) guidé par un boulon de guidage de ressort (20) monté de manière fixe sur la pièce de fond (4 c) du boîtier, et **en ce qu'**est monté à l'extrémité de traction du câble tracteur (18 b) du câble Bowden une fourche de maintien (19) en forme de T décalable axialement dans le cadre d'une course de commande prédéfinie dans la traverse (3) et configurée comme l'écrou (9) en forme de T selon la revendication 11, qui peut être mis en liaison effective avec commande de positionnement avec deux cliquets de verrouillage (10) selon la revendication 12 de manière à ce que, à l'état de base, elle maintient la traverse (3) en position abaissée contre la force des ressorts de pression (17) et verrouille les cliquets (10) avec les boulons (12) à la position relevée de l'arceau de sécurité et, après suppression du verrouillage à la fin de la course de commande, rétracte sous l'effet de la commande forcée par le mécanisme d'ajustage de toit l'arceau de sécurité déployé.

14. Système de protection anticapotage selon les revendications 2 et 5,
**caractérisé en ce que** le tuyau (18 a) du câble Bowden (18) est fixé sur le bloc de guidage (5) et est monté à l'extrémité de traction du câble tracteur (18 a) du câble Bowden une pièce de maintien (22) en forme de T décalable axialement dans le cadre d'une course de commande prédéfinie dans la traverse (3) et configurée comme l'écrou (9) en forme de T selon la revendication 11, qui peut être mis en liaison effective avec commande de positionnement avec deux cliquets de verrouillage (10) selon la revendication 12 de manière à ce que, après l'ouverture du toit, la pièce de maintien (22), tire la traverse (3) par l'intermédiaire de cliquets de verrouillage (10) déverrouillés vers le haut, verrouille les cliquets (10) avec les boulons (12) à la position relevée de l'arceau de sécurité et, à la fin de la course de commande, déverrouille les cliquets de verrouillage (10) sous l'effet de la commande forcée par le mécanisme d'ajustage de toit et pousse la traverse (3) vers le bas.
